# EUROPÄISCHE PATENTSCHRIFT

(11) **EP 2 619 618 B1**
(45) Veröffentlichungstag und Bekanntmachung des Hinweises auf die Patenterteilung: **25.08.2021**
(21) Anmeldenummer: 11757668.6
(22) Anmeldetag: 20.09.2011
(51) Int. Cl.: G02B 7/02

(54) **GEODÄTISCHES INSTRUMENT MIT EINEM STABILISATIONSELEMENT ZUR MONTAGE UND JUSTIERUNG EINER OPTISCHEN BAUGRUPPE IN EINE HALTERUNG UND MONTAGEVERFAHREN FÜR DAS STABILISATIONSELEMENT**
GEODESIC INSTRUMENT WITH A STABILISATION ELEMENT FOR FITTING AND ADJUSTING AN OPTICAL ASSEMBLY IN A HOLDER AND METHOD FOR FITTING THE STABILISATION ELEMENT
INSTRUMENT GÉODÉSIQUE DOTÉ D'UN ÉLÉMENT DE STABILISATION DESTINÉ AU MONTAGE ET À L'AJUSTEMENT D'UN COMPOSANT OPTIQUE DANS UNE FIXATION ET PROCÉDÉ DE MONTAGE POUR L'ÉLÉMENT DE STABILISATION

(30) Priorität: 22.09.2010 EP 10178351
(43) Veröffentlichungstag der Anmeldung: 31.07.2013
(73) Patentinhaber: Hexagon Technology Center GmbH, 9435 Heerbrugg (CH)
(72) Erfinder: ISELI, Claudio, 9434 Au (CH); SCHEJA, Jochen, A-6845 Hohenems (AT)
(74) Vertreter: Kaminski Harmann
(86) Internationale Anmeldenummer: PCT/EP2011/066357
(87) Internationale Veröffentlichungsnummer: WO 2012/038447

(56) Entgegenhaltungen:
- EP-A1- 1 677 133
- DE-B- 1 127 110
- DE-U1- 8 625 896
- US-A- 4 812 015
- US-A- 4 854 671
- US-A- 5 052 782
- US-A1- 2003 112 532
- US-A1- 2006 158 423
- VALENTE T M ET AL: "INTERFERENCE FIT EQUATIONS FOR LENS CELL DESIGN USING ELASTOMERIC LENS MOUNTINGS", OPTICAL ENGINEERING, SOC. OF PHOTO-OPTICAL INSTRUMENTATION ENGINEERS, BELLINGHAM, Bd. 33, Nr. 4, 1. April 1994 (1994-04-01), Seiten 1223-1228, XP000440059, ISSN: 0091-3286, DOI: DOI:10.1117/12.166936

## Beschreibung

Die Erfindung betrifft ein geodätisches Gerät mit einer optischen Baugruppe, einer Halterung für die optische Baugruppe und einem Stabilisationsbauteil gemäß Anspruch 1 und ein Montageverfahren zum präzise positionierten Montieren einer optischen Baugruppe in eine Halterung mit einem Stabilisationsbauteil gemäß Anspruch 12.

Optische Instrumente werden im Allgemeinen für die Aufnahme von Eigenschaften definierter Punkte in einer Messumgebung verwendet. Bekannte Beispiele für derartige Messgeräte sind z.B. geodätische Geräte zur Vermessung wie z.B. der Theodolit bzw. eine Totalstation. Solche Geräte verfügen über Winkel- und Distanzmessfunktionen, welche eine Richtungs- und Distanzbestimmung zu einem ausgewählten Ziel erlauben. Die Winkel- bzw. Distanzgrössen werden dabei im inneren Bezugssystem des Gerätes ermittelt und müssen für eine absolute Positionsbestimmung ggf. noch mit einem äusseren Bezugssystem verknüpft werden.

Für eine exakte Distanzbestimmung befindet sich eine Anzieleinrichtung, zumeist ein Teleskop, mit optischer Achse, insbesondere einer Zielachse, im Vermessungsgerät. In diese wird ein Laserstrahl eingekoppelt um z.B. mittels Pulslaufzeitbestimmung die Distanz zu Messpunkten zu ermitteln. Aufgrund der hohen geforderten Messgenauigkeit im mm-Bereich sind derzeit die meisten Instrumente mit einem elektrooptischen Distanzmesser ausgerüstet, welcher nach dem Phasenmessprinzip arbeitet. Zudem bieten diese bei distanzmessenden Theodoliten wegen ihres kleineren Volumens Vorteile.

Objektive, Spiegel, Linsen oder andere optische Komponenten müssen hochpräzise in das Gehäuse oder in die Anzieleinrichtung eingebaut und justiert werden, damit im optischen Strahlengang keine ungewollten Abweichungen oder Reflexe auftreten und somit bei einer Messung möglichst genaue Werte bestimmt werden können. Auch das Einkoppelelement für den Laserstrahl muss darin exakt eingepasst sein, damit die Richtung des Strahls möglichst zentrisch und parallel zur Zielachse ausrichtbar ist und möglichst zeitinvariant gehalten wird.

Die genaue Montage von optischen Bauteilen oder optischen Baugruppen in geeignete Halterungen kann Bekanterweise dadurch gewährleistet werden, dass eine aufwändige Bearbeitung der Bauteile durchgeführt wird. Aufgrund der engen Toleranzen müssen die Bauteile möglichst genau aneinander angepasst werden, um eine exakte Positionierbarkeit zu erreichen. Diese Prozesse sind zumeist sehr kostenintensiv und technologisch anspruchsvoll. Schon kleinste Abweichungen bei der Bearbeitung der Bauteile können zu unzureichend stabilen Verbindungen führen und damit eine Nachbearbeitung oder den Ersatz zumindest eines der Bauteile notwendig machen. Darüber hinaus können thermische Effekte, wie das unterschiedliche Ausdehnungsverhalten der Komponenten, nur schwer kompensiert werden, da die Bauteile zumeist aus unterschiedlichen Materialien gefertigt sind. Dadurch kann eine relative Lageänderung der Bauteile zueinander eintreten und der Strahlengang der optischen Komponente so verändert werden, dass die geforderte Genauigkeit oder gar die Funktionalität des Geräts nicht weiter gewährleistet werden kann.

Weiterhin ist bekannt, dass elastisch verpresste Dichtelemente, z.B. O-Ringe, zu dieser Montage eingesetzt und zwischen den Bauteilen platziert und eingebaut werden. Die Toleranzen für die Fertigung der Bauteile kann damit vergrössert und auf eventuell notwendige Nachbearbeitungen verzichtet werden. Teilweise werden besagte Dichtelemente auch dazu verwendet Spielfreiheit in Radialrichtung zu gewährleisten.

Aus der DE 19 924 849 ist eine lösbare und spannungsfreie Halterung eines in eine Fassung zentriert eingelegten optischen Bauelementes bekannt. Das optische Bauelement ist hierbei in dem zu haltenden Randbereich mit einer zur Fassung hin geneigten Fasenfläche versehen und die Fassung weist einen in axialer Richtung vor dem optischen Bauelement offenen Nuteinstich auf. Zwischen Fasenfläche und Nuteinstich ist ein in axialer Richtung elastisch verformbares Ringelement, z.B. ein O-Ring, eingedrückt.

Die Verformbarkeit in axialer Richtung ermöglicht einen Toleranzausgleich zwischen Fasenkante und Nuteinstich, sowie einen Ausgleich einer Materialverformung in axialer Richtung. Geringe Toleranzen zwischen der Fasenkante und der Lage des Nuteinstichs werden durch ein elastisch verformbares Ringelement ausgeglichen. Ebenso können Materialveränderungen in axialer Richtung durch das Ringelement aufgefangen werden. Zusätzlich stellt das Ringelement eine Stoß und Vibrationssicherung dar.

In der DE 10 043 344 wird weiter offenbart, dass an einer Umfangsfläche einer Linse eine Ringnut ausgebildet ist und die Linse ausschließlich über eine Verbindung radial und axial gehalten wird, die durch elastische Elemente an der Linsenfassung mit freien Enden, die in die Ringnut radial eingreifen, entsteht. Die unterschiedliche thermische Ausdehnung der Linsenfassung und der Linse wird dabei in radialer Richtung über die Federwirkung der Segmente kompensiert. Dadurch, dass die Linse mit der Fassung ausschließlich über elastische Segmente verbunden ist, werden dynamische Belastungen nur gedämpft auf die Linse übertragen.

Ein Nachteil der Verwendung von elastischen Dichtelementen für die Montage ist die hohe Reibung und die damit verbundenen "Stick-Slip-Effekte", die beim Montieren und Justieren auftreten können, und somit die Justage der Bauteile erschweren. Dabei können Verzerrungen im Material auftreten und eine asymmetrische Kräfteverteilung die Folge sein, welche durch Temperatur- oder Schockeinflüsse zu relativen Verschiebungen der Bauteile führen können. Des Weiteren weisen diese Elemente aufgrund von Inkompressibilität, nicht vorhandener Plastizität und relativ breiter Toleranzgüte hohe Kontaktkräfte auf, wodurch diese Teile nicht optimal für derartige Montagezwecke geeignet ist. Dadurch können hohe Kräfte zwischen den Bauteilen entstehen, welche wiederum Ursache für ein instabiles Verhalten sein können, und auftretende Erschütterungen können nicht in notwendiger Art und Weise abgefedert.

EP1677133 A1 offenbart eine Halterung für eine optische Baugruppen, in der ein plastisch-elastisches Element in mäandrierender Form zwischen optischer Baugruppe und Halterung eingefügt ist.

Vor diesem Hintergrund ist es eine allgemeine Aufgabe der vorliegenden Erfindung verbesserte und vereinfachte Montagebedingungen für ein optisches Instrument bereitzustellen, mit welchen die Montage und Justage von optischen Elementen oder optischen Baugruppen in geeignete Halterungen oder Gehäuse zum einen hochpräzise ausgeführt werden kann, gleichzeitig aber auch geforderte thermische und mechanisch-dynamische Stabilitäten gewährleistet werden können und darüber hinaus einen geringeren Technologieaufwand verursachen.

Eine spezifische Aufgabe der Erfindung ist es, das optische Element oder die optische Baugruppe mit Hilfe eines Stabilisationselements zu montieren und damit gleichzeitig geforderte Genauigkeiten und Stabilitäten zu erreichen. Darüber hinaus sollen dabei Fertigungstoleranzen des optischen Elements oder der optischen Baugruppe so ausgleichen werden können, dass trotz einer möglichen ungenauen Fertigung der Bauteile deren Montage und Justage dennoch präzise erfolgen kann.

Diese Aufgaben werden durch die Verwirklichung der kennzeichnenden Merkmale der unabhängigen Ansprüche gelöst. Merkmale, die die Erfindung in alternativer oder vorteilhafter Weise weiterbilden, sind den abhängigen Patentansprüchen zu entnehmen.

Ein erfindungsgemässes optisches Instrument weist eine optische Baugruppe, eine Halterung für die Baugruppe und ein Stabilisationsbauteil zum Toleranzausgleich und zum stabilen Verbinden von optischer Baugruppe und Halterung mit mindestens einem, in einem Spalt zwischen Baugruppe und Halterung verpressbaren, Stabilisationselement auf, wobei an diesem Stabilisationselement eine Verformungszone vorgesehen ist. Das Stabilisationselement weist weiter in unmontiertem Zustand eine Dicke auf, die grösser als die Weite des Spaltes ist. In einem grob positionierten Zustand wirkt durch Einsetzen der optischen Baugruppe in die Halterung Druck auf das Stabilisationselement, insbesondere auf die Verformungszone, sodass das Stabilisationselement plastisch deformiert im Spalt vorliegt. Weiter ist in diesem Justierzustand die Winkelstellung von optischer Baugruppe zu Halterung hochpräzise ausrichtbar und das Stabilisationselement befindet sich in genanntem plastisch deformiertem Zustand. Nach einer Ausrichtung werden letztlich die optische Baugruppe und die Halterung in der hochpräzisen Ausrichtung fixiert und definieren somit einen endmontierten Zustand, in welchem restelastische Kräfte durch das deformierte Stabilisationselement radial zu einer optischen Achse, insbesondere zu einer optischen Zielachse, zwischen Baugruppe und Halterung wirken.

Der als Einsetzen der optischen Baugruppe in die Halterung beschriebene Schritt lässt sich weiter unterteilen in ein Einlegen bzw. Positionieren des Stabilisationsbauteils am optischen Bauteil und ein anschliessendes Zusammenfügen der Kombination aus optischem Bauteil und Stabilisationsbauteil mit der Halterung. Bei diesem Zusammenfügen wird das optische Bauteil so in die Halterung eingesetzt bzw. in die Halterung geschoben, dass sich das Stabilisationselement dabei zwischen dem optische Bauteil und der Halterung befindet und ebenfalls zwischen diese geschoben und dabei zwischen den beiden Teilen verpresst wird.

Die stabile Montage einer optischen Baugruppe, oder von zumindest Teilen dieser Baugruppe, muss mit höchster Präzision erfolgen. Erfindungsgemäss verwendet ein Monteur hierzu ein geeignetes Stabilisationsbauteil mit mehreren Stabilisationselementen. Das Stabilisationsbauteil wird zwischen einem Objektiv und einer dafür vorgesehenen Halterung an einem Teleskop platziert und die beiden Teile werden grob miteinander verbunden. Das Verbinden der Bauteile bewirkt eine Verpressung der Stabilisationselemente in einem vorgesehen Spalt zwischen Teleskopobjektiv und Halterung, wodurch die Stabilisationselemente eine zumindest teilweise plastische Verformung aufweisen. Dabei auftretende radiale Kräfte bewirken eine stabile Lagerung der beiden Teile zueinander. Darüber hinaus sind die Kräfte derart ausgebildet, dass aufgrund der elastischen Eigenschaften des Materials, aus welchem die Stabilisationselemente gefertigt sind, jetzt eine präzise Feinjustage mindestens eines Freiheitsgrades, z.B. die Ausrichtung der Winkelstellung oder eine axiale Ausrichtung beider Bauteile zueinander, durch den Monteur erfolgen kann. Mittels eines Schraubrings erfolgt anschliessend eine Fixierung des Objektivs zur Halterung am Teleskop in dieser hochpräzisen Ausrichtung.

Insbesondere kann ein optisches Instrument, wie z.B. eine Totalstation, dabei ein Stabilisationsbauteil mit einem oder mehreren Stabilisationselementen aufweisen, sodass die radialen Kräfte, verursacht durch das Verpressen der Elemente, gleichmässig verteilt über die Kontaktflächen der optischer Baugruppe oder der Halterung vorliegen.

Zusätzlich kann das Stabilisationsbauteil einen Rahmen aufweisen, an welchem die Stabilisationselemente angeordnet sind, mit einer Form, die der Form von mindestens einem der zu verbindenden Bauteile entspricht. Diese Ausführung kann die Montage der Stabilisationselemente insofern erleichtern, dass nicht jedes Element einzeln in eine dafür vorgesehene Position gebracht werden muss, sondern durch die korrekte Positionierung des einen Bauteils alle damit verbundenen Elemente in einer definierten Position vorliegen.

Insbesondere kann dieses Stabilisationsbauteil und dessen Rahmen dafür ringförmig ausgeführt sein, wobei die Stabilisationselemente gleichmässig über das Stabilisationsbauteil verteilt angeordnet und in axialer Richtung ausgerichtet sind. Durch diese Ausrichtung sind die Stabilisationselemente leichter in einem Spalt positionierbar und ausrichtbar. Zur weiteren Erleichterung der Platzierung des Stabilisationsbauteils z.B. zwischen optischer Baugruppe und Halterung und einer anschliessenden Justage der optischen Baugruppe kann das Stabilisationsbauteil aus mehreren Teilen bestehen. Z.B. kann ein ringförmiges Bauteil in einzelne Ringsegmente von jeweils einem viertel Kreisbogen unterteilt sein, wobei vier Segmente bei einer Montage einzeln eingesetzt und dadurch zu einem Ring zusammengesetzt werden.

Darüber hinaus kann das optische Instrument mit optischer Baugruppe und Halterung derart gestaltet sein, dass die Anzahl der zur Montage verwendeten Stabilisationselementen von den elastischen Kräften senkrecht zur optischen Achse derart abhängt, dass in einem Justierzustand die Winkelstellung von optischer Baugruppe zu Halterung, insbesondere durch eine gleitende Drehbewegung, hochpräzise ausrichtbar ist und sich das Stabilisationselement dabei in einem plastisch deformierten Zustand befindet.

Das optische Instrument kann weiter ein Stabilisationselement aufweisen, das insbesondere im Bereich der Verformungszone, homogene plastische Eigenschaften, insbesondere einen homogenen plastischen Fliessbereich, aufweist. Indem die elastischen Eigenschaften des Stabilisationselements über diesen Fliessbereich hinweg weitgehend konstant bleiben, kann somit ein für die genaue Positionierung der Bauteile zueinander benötigter Toleranzbereich vergrössert werden. Damit können Fertigungskosten, die für eine präzise Bearbeitung der zu verbindenden Bauteile aufgebracht werden müssen, zumindest teilweise eingespart werden
Ein erfindungsgemässes Stabilisationsbauteil kann ferner in einem Spritzgussverfahren hergestellt werden. Das Spritzgussverfahren bietet den Vorteil einer schnellen und technologisch beherrschbaren Produktionsweise und kann die Produktionskosten der Bauteile überschaubar halten bzw. verringern.

Ausserdem kann in die optische Baugruppe das Stabilisationsbauteil integriert sein, insbesondere wobei das Stabilisationsbauteil und/oder das Stabilisationselement an die optische Baugruppe angespritzt ist oder die optische Baugruppe und das Stabilisationsbauteil und/oder das Stabilisationselement einstückig ausgebildet sind. Durch diese Weiterbildung kann eine Montage der Teile derart erleichtert werden, dass ein vorangehendes Platzieren des Stabilisationselements oder - bauteils zwischen zwei Teilen entfallen kann. Als optisches Instrument kann hier ein geodätisches Gerät, insbesondere eine Totalstation oder ein Theodolit, und als optische Baugruppe z.B. ein Teleskop verstanden werden.

Erfindungsgemäss kann das Stabilisationselement innerhalb eines Materialspannungsbereichs oberhalb einer Streckgrenze bzw. Dehngrenze bei variierender Materialdehnung eine im Wesentlichen konstant maximale auftretende Materialspannung aufweisen und das Stabilisationselement im grob positionierten Zustand in einem Belastungszustand oberhalb der Streckgrenze bzw. Dehngrenze vorliegen.

Ferner kann das Stabilisationselement erfindungsgemäss aus einem bestimmten Fertigungsmaterial bestehen mit einem innerhalb eines plastischen Bereichs einer eine Spannungs-Dehnungs-Eigenschaft des Fertigungsmaterials repräsentierenden Spannungsdehnungskurve definierten Spannungs-Dehnungs-Gradienten, insbesondere wobei das Fertigungsmaterial dabei (innerhalb des plastischen Bereichs) einen Materialspannungswert von kleiner als 1000 MPa bzw. zwischen 5 MPa und 1000 MPa aufweist, insbesondere wobei der Spannungs-Dehnungs-Gradient durch eine in der Spannungsdehnungskurve für das Fertigungsmaterial gegebene Steigung zwischen -1000 MPa/(m/m) und +1000 MPa/(m/m) (innerhalb des plastischen Bereichs), insbesondere zwischen -500 MPa und +500 MPa, insbesondere zwischen -250 MPa und +250 MPa, definiert ist (wobei die Spannungsdehnungskurve das Materialverhalten unter Belastung widerspiegelt), insbesondere wobei das Stabilisationselement innerhalb des plastischen Bereichs bei einer im Wesentlichen konstanten Materialfestigkeit plastisch deformierbar ist. Mit einem niedrigen Gradienten (nahe Null) nähert sich das Spannungs-Dehnungs-Verhalten somit einem ideal-plastischen Verhalten an.

Erfindungsgemäss weist ein Montageverfahren zum präzise positionierten Montieren einer optischen Baugruppe mit definierter optischer Achse in eine Halterung, wobei in zusammengesetztem Zustand zwischen Baugruppe und Halterung ein Spalt mit definierter Weite vorhanden ist, ein Stabilisationsbauteil, und mindestens ein, in dem Spalt verpressbares, Stabilisationselement auf, wobei das Stabilisationselement eine Verformungszone aufweist. Dabei erfolgen in einem ersten Schritt das Platzieren des Stabilisationsbauteils zwischen Baugruppe und Halterung sowie die grobe Positionierung der optischen Baugruppe und der Halterung zueinander. Weiter findet ein Verpressen des Stabilisationselements zwischen Baugruppe und Halterung statt, sodass die Verformungszone innerhalb eines homogenen plastischen Bereichs deformiert wird und elastische Eigenschaften erhalten bleiben. Im nächsten Schritt erfolgt ein Justieren der Winkelstellung und/oder einer axialen Position der optischen Baugruppe zur Halterung, wobei die plastische Deformation des Stabilisationselements erhalten bleibt. Zuletzt werden die optische Baugruppe und die Halterung fixiert, sodass elastische Kräfte durch das deformierte Stabilisationselement zwischen Baugruppe und Halterung radial zur optischen Achse wirken.

Insbesondere kann das Justieren der optischen Baugruppe zur Halterung durch ein Drehen der optischen Baugruppe um die optische Achse, insbesondere Zielachse, und/oder durch ein axiales Bewegen parallel zur optischen Achse erfolgen.

Das Justieren der optischen Baugruppe in die dafür vorgesehene Halterung wird notwendig, um z.B. den Strahlengang eines optischen Instruments derart auszurichten, dass dieser zentrisch durch die optische Baugruppe verläuft. Hierfür kann die optische Baugruppe vermittelt über das verpresste Stabilisationselement zum einen um seine optische Achse rotiert werden, zum anderen kann die optische Baugruppe auch gleitend entlang der optischen Achse fein justiert werden, um z.B. eine vordefinierte Position in der Halterung zu erreichen und in dieser Position fixiert zu werden. Insbesondere wenn an der Baugruppe weitere nicht rotationssymmetrische Teile vorgesehen sind und diese in einer exakt vorbestimmten Stellung relativ zur Halterung verbaut werden müssen kann eine derartige Justierung notwendig sein.

Insbesondere kann erfindungsgemäss im Rahmen des Montageverfahrens das Stabilisationselement innerhalb eines Materialspannungsbereichs oberhalb einer Streckgrenze bzw. Dehngrenze bei einer im Wesentlichen konstant maximalen Materialspannung gedehnt werden und beim groben Positionieren in einem Belastungszustand oberhalb der Streckgrenze bzw. Dehngrenze vorliegen. Mit anderen Worten kann das Stabilisationselement innerhalb eines Materialspannungsbereichs oberhalb einer Streckgrenze bei variierender Materialdehnung eine im Wesentlichen konstant maximale Materialspannung aufweisen. Ausserdem kann das Stabilisationselement in diesem Zusammenhang erfindungsgemäss aus einem bestimmten Fertigungsmaterial bestehen mit einem innerhalb eines plastischen Bereichs einer eine Spannungs-Dehnungs-Eigenschaft des Fertigungsmaterials repräsentierenden Spannungsdehnungskurve definierten Spannungs-Dehnungs-Gradienten, insbesondere wobei der Spannungs-Dehnungs-Gradient durch eine Steigung zwischen -1000 MPa/(m/m) und +1000 MPa/(m/m) (insbesondere zwischen -500 MPa und +500 MPa, insbesondere zwischen -250 MPa und +250 MPa) der Spannungsdehnungskurve für das Fertigungsmaterial repräsentiert wird, insbesondere wobei das Fertigungsmaterial dabei einen Materialspannungswert von kleiner als 1000 MPa bzw. zwischen 5 MPa und 1000 MPa aufweist, insbesondere wobei das Stabilisationselement innerhalb des plastischen Bereichs bei einer im Wesentlichen konstanten Materialfestigkeit plastisch deformiert wird.

Das erfindungsgemässe Verfahren und die erfindungsgemässe Vorrichtung werden nachfolgend anhand von in den Zeichnungen schematisch dargestellten konkreten Ausführungsbeispielen rein beispielhaft näher beschrieben, wobei auch auf weitere Vorteile der Erfindung eingegangen wird. Im Einzelnen zeigen:
- Fig. 1: ein erfindungsgemässes Stabilisationsbauteil im Querschnitt;
- Fig. 2: ein erfindungsgemässes Stabilisationsbauteil in montiertem Zustand;
- Fig. 3: ein erfindungsgemässes Stabilisationsbauteil für eine axiale Ausrichtung in montiertem Zustand;
- Fig. 4: eine Ausführungsform des erfindungsgemässen Stabilisationsbauteils mit Rahmen und sechs Stabilisationselementen;
- Fig. 5: eine weitere Ausführungsform des erfindungsgemässen Stabilisationsbauteils mit Rahmen und drei Stabilisationselementen;
- Fig. 6: eine Ausführungsform einer optischen Baugruppe und Halterung mit einem erfindungsgemässen Stabilisationselement im Querschnitt und in montiertem Zustand;
- Fig. 7: eine weitere Ausführungsform einer optischen Baugruppe und Halterung mit einem erfindungsgemässen Stabilisationsbauteil mit drei Stabilisationselementen im Querschnitt und in montiertem Zustand;
- Fig. 8: eine Ausführungsform einer Visiereinrichtungsoptik mit erfindungsgemässen Stabilisationselementen;
- Fig. 9: eine Spannungsdehnungskurve für ein Material, aus welchem ein erfindungsgemässes Stabilisationselement gefertigt ist.

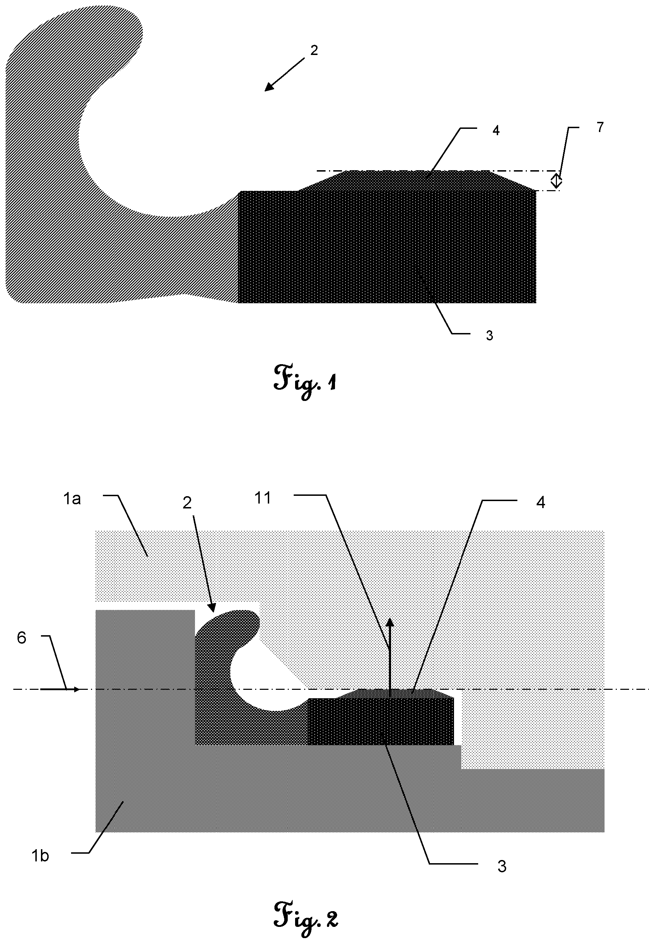

Figur 1 zeigt ein erfindungsgemässes Stabilisationsbauteil 2 für die Montage einer optischen Baugruppe in eine Halterung im Querschnitt. Das Stabilisationsbauteil besteht dabei aus einem Stabilisationselement 3 mit einem Verformungselement 4. Das Verformungselement weist weiter einen Verpressungsbereich 7 auf, innerhalb dessen das Verformungselement 4 bei einer Montage des Stabilisationsbauteils 2 in einem optischen Instrument deformiert wird, der aber nicht überschritten wird.

Das Stabilisationselement 3 mit Verformungselement 4 ist dicker als die Weite eines Spaltes, der zwischen zwei präzise gefertigten Bauteilen besteht, wenn diese auf die vorgesehene Art und Weise miteinander verbunden werden. Durch die Verpressung des Stabilisationselementes 3 wird in diesem eine Druckspannung aufgebaut, die zu einer plastischen Deformation im Verformungselement 4 führt.

Die Deformation ist dabei auf einen Toleranzbereich beschränkt, in welchem die elastische Druckspannung im Fertigungsmaterial im Wesentlichen konstant bleibt. Durch diese Vorspannung gelingt eine thermisch und klimatisch stabile und schockresistente Positionierung zweier Bauteile zueinander.

In Figur 2 wird schematisch im Querschnitt ein erfindungsgemässes Stabilisationsbauteil 2 in montiertem Zustand zwischen einer Halterung 1a und einer optischen Baugruppe 1b gezeigt. Das Stabilisationsbauteil 2 und die optische Baugruppe 1b sind dabei rotationssymmetrisch um die optische Achse - hier nicht gezeigt - der optischen Baugruppe 1b ausgeführt. Das Verformungselement 4 liegt deformiert vor. Durch die Deformation treten radial wirkende, restelastische Kräfte 11 auf, die dafür Sorge tragen, dass die Bauteile im Wesentlichen spielfrei zueinander positioniert und schockresistent gelagert sind. Die radialen Kräfte 11 sind das Resultat der elastischen Materialeigenschaften des Stabilisationselements 3 und des Verformungselements 4 und der Deformation dieser Elemente. Der Pfeil 6 kennzeichnet die Richtung, in welcher die Montage der Teile stattfindet. Die optische Baugruppe 1b wird zusammen mit dem Stabilisationsbauteil 2 in die Halterung 1a geschoben bis beide eine Vormontageposition erreicht haben. In dieser Position kann die optische Baugruppe präzise gegenüber der Halterung ausgerichtet und somit eine exakte Justage der optischen Baugruppe vorgenommen werden. Durch diese Anordnung verbleibt nur noch ein Freiheitsgrad, hier ein Rotationsfreiheitsgrad, im System und das Ausrichten kann somit hochpräzise erfolgen.

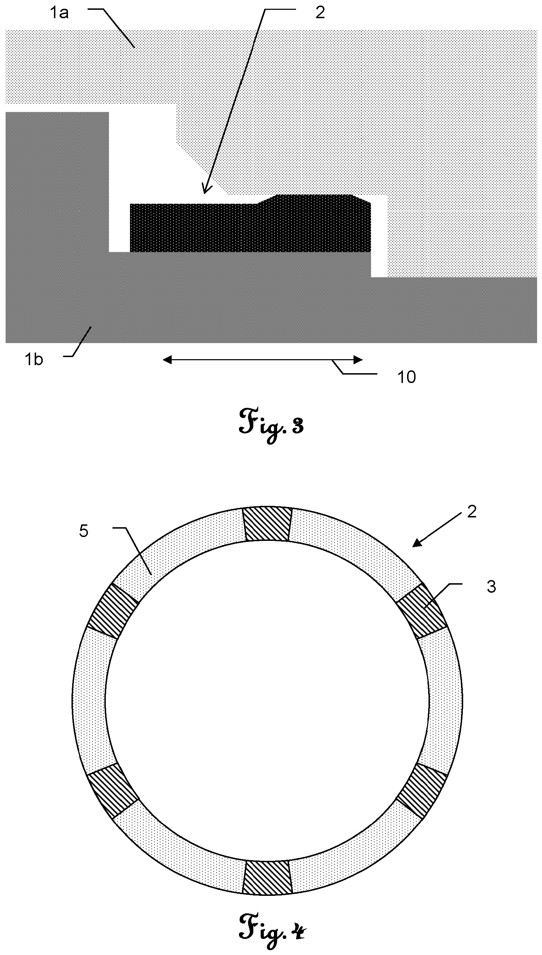

Figur 3 zeigt ebenfalls ein erfindungsgemässes Stabilisationsbauteil 2 in montiertem Zustand zwischen einer Halterung 1a und einer optischen Baugruppe 1b. Durch dieses Stabilisationsbauteil 2 kann, wie durch den Pfeil 10 angedeutet, eine Justage der optischen Baugruppe 1b und der Halterung 1a relativ zueinander in einer axialen Richtung erfolgen. Aufgrund der spezifischen Materialeigenschaften des Stabilisationsbauteils 2 kann die optische Baugruppe 1b in der Halterung 1a in axialer Richtung weitestgehend gleitend bewegt und damit z.B. ohne das Auftreten von unerwünschten Verspannungen im Material nach dem Erreichen einer vorgesehenen Position fixiert werden. Zusätzlich zu dieser axialen Ausrichtung kann wie für Figur 2 beschrieben ein Ausrichten um eine Drehachse erfolgen.

Figur 4 zeigt ein erfindungsgemässes Stabilisationsbauteil 2 in einem Schnitt senkrecht zur Montagerichtung. Das Bauteil weist einen Rahmen 5 auf, an dem sechs gleichartige Stabilisationselemente 3 angeordnet sind. Das Stabilisationsbauteil 2 ist hier kreisrund ausgeführt und eignet sich zum Einbau einer runden und rotationssymmetrischen optischen Baugruppe in eine entsprechende Halterung. Die Stabilisationselemente 3 sind parallel zur Montagerichtung 6 (gemäss Figur 2) des Stabilisationsbauteils 2 ausgerichtet.

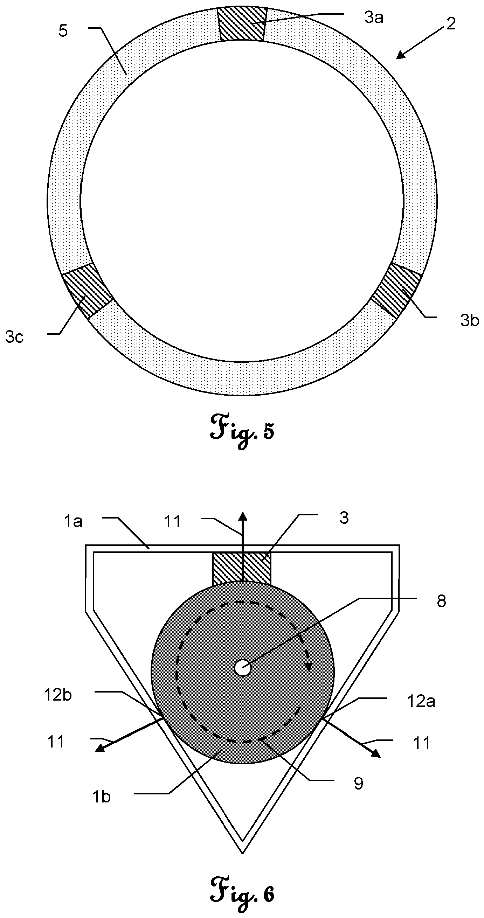

Dagegen wird in Figur 5 eine zweite Ausführungsform eines erfindungsgemässen Stabilisationsbauteils 2 ebenfalls in einem Schnitt senkrecht zur Montagerichtung gezeigt, welches drei unterschiedliche Stabilisationselemente 3a, 3b, 3c an einem Rahmen 5 aufweist, insbesondere wobei die Stabilisationselemente 3a, 3b, 3c sich hinsichtlich Bauform oder Material unterscheiden können. Insbesondere für nicht symmetrische Bauformen von optischen Baugruppen oder Halterungen ist diese Ausführungsform geeignet. Wie in Figur 3 sind die Stabilisationselemente 3a, 3b, 3c auch hier parallel zur Montageachse des Bauteils ausgerichtet.

Figur 6 zeigt eine Ausführungsform einer optischen Baugruppe 1b und einer Halterung 1a für die Baugruppe in montiertem Zustand. In dieser Ausführungsform wird ein einzelnes erfindungsgemässes Stabilisationselement 3 zur Montage verwendet, wobei die optische Baugruppe 1b an zwei weiteren Berührpunkten 12a, 12b mit der Halterung 1a in Kontakt und damit stabil gelagert ist. Nach dem groben Montieren findet im grob montierten Zustand auch hier eine Präzisionsausrichtung der beiden Bauteile zueinander statt. Eine Drehung bzw. Rotation 9 um die optische Achse 8 oder eine axiale Ausrichtung werden aufgrund einer geeigneten Anzahl von Stabilisationselementen 3 - hier nur ein einzelnes - und der damit einstellbaren radialen Kräfte 11 möglich. Die auftretenden radialen Kräfte verteilen sich dabei weitgehend symmetrisch, hier z.B. rotationssymmetrisch radial um die optische Achse in einem Winkel von jeweils 120° zueinander, auf die Berührpunkte 12a, 12b und das Stabilisationselement 3. Bei einer grösseren Anzahl vorhandener Stabilisationselemente 3 werden die radialen Kräfte 11 auf mehrere einzelne Elemente weitgehend symmetrisch verteilt.

In einer weiteren Ausführungsform können z.B. sechs Stabilisationselemente 3 vorgesehen sein, die symmetrisch um die Achse 8 angeordnet sind, wobei benachbarte Elemente 3 jeweils in einen Zwischenwinkel von 60° zueinander angeordnet sind. Zusätzlich kann die optische Baugruppe 1b in der Halterung 1a entlang der optische Achse 8 bewegt und dadurch bezüglich einer zweiten Richtung ausgerichtet werden.

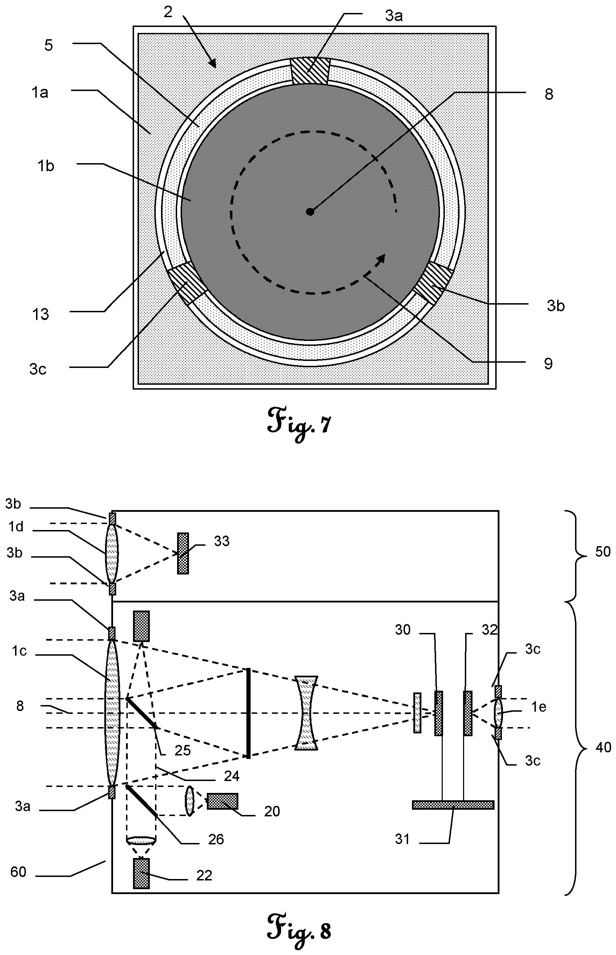

Eine weitere erfindungsgemässe Ausführungsform wird in Figur 7 gezeigt. Eine optische Baugruppe 1b ist mittels eines Stabilisationsbauteils 2 in eine geeignete Halterung 1a montiert. Das Stabilisationsbauteil 2 befindet sich in einem vorgesehenen Spalt 13 zwischen optischer Baugruppe 1b und Halterung 1a. Es weist einen Rahmen 5 in Ringform auf, an welchem drei Stabilisationselemente 3a, 3b, 3c, die über den Rahmen 5 beidseitig hinausragen, angeordnet sind. Die Dicke der Stabilisationselemente 3a, 3b, 3c ist in unmontiertem Zustand grösser als die Weite des Spaltes 13. Im gezeigten montierten Zustand sind die Stabilisationselemente 3a, 3b, 3c derart verpresst, dass vorhandene Toleranzen von den restlichen Bauteilen ausgeglichen werden und im montierten Zustand benötigte Schockfestigkeiten und bei thermischen Einflüssen genügende Lage-Stabilität vorhanden sind. Wie in der Ausführungsform in Figur 6 erfolgt auch hier eine präzise Ausrichtung der optischen Baugruppe 1b zur Halterung 1a durch Rotation 9 der Teile zueinander, um die optische Achse 8 der Baugruppe 1b.

Figur 8 zeigt eine Visiereinrichtung 40 mit einem Objektiv 1c, einer Fokussieroptik 22, einem Kamerasensor 30, einer Anzeigekomponente 32 und einem Okular 1e. Zusätzlich wird eine Übersichtseinrichtung 50 mit einer Übersichtskamera 33 und einem zweiten Objektiv 1d gezeigt. Die Visiereinrichtung 40 und die Übersichtseinrichtung 50 sind in einem Gehäuse 60 angeordnet.

Zwischen den Objektiven 1c, 1d und dem Gehäuse 60 sowie zwischen dem Okular 1e und dem Gehäuse 60 sind jeweils zur Gewährleistung einer schockresistenten und thermisch stabilen Lagerung geeignete erfindungsgemässe Stabilisationselemente 3a, 3b, 3c angeordnet. Für eine Distanzmessung und eine automatische Zielsuchfunktion sind eine EDM-Laserquelle 20 bzw. eine Feinanziel-Lichtquelle 22 vorgesehen, wobei die EDM-Laserstrahlen bzw. die Feinanziel-Strahlen anhand eines ersten und zweiten Strahlkombinierers 25,26 - wie beispielsweise Strahlteilerflächen mit dichroitischer Beschichtung - entsprechend in oder aus dem Strahlengang 24 ein- und ausgekoppelt werden. Mit der durch die Stabilisationselemente 3a zusätzlich gegebenen Möglichkeit einer präzisen Justage des Objektivs 1c kann eine genaue Ausrichtung des Strahlengangs 24 und der optischen Achse 8 des Objektivs 1c erfolgen. Insbesondere kann die präzise Ausrichtung eines Kombinationsbauteils, bestehend aus mindestens einem Objektiv 1c und einem Strahlkombinierer 25, unerlässlich hinsichtlich des Verlaufs des Strahlengangs 24 sein. Das Objektiv 1c kann z.B. auch mehrlinsig aufgebaut oder panfokal ausgeführt sein.

In der Visiereinrichtung 40 ist ausserdem ein Grafikprozessor 31 vorhanden, der mit dem Kamerasensor 30 und der Anzeigekomponente 32 verbunden ist, sodass ein erfasstes Kamerabild als generiertes Anzeigebild von einem Benutzer durch das Okular 1e betrachtet werden kann.

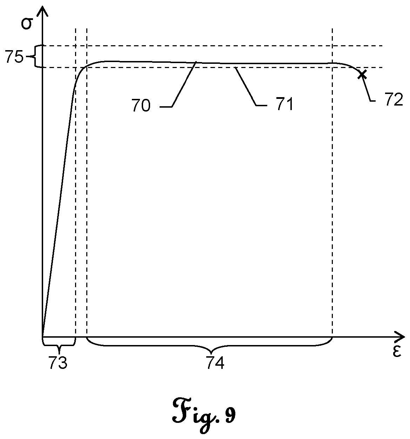

Figur 9 zeigt eine (idealisierte) Spannungsdehnungskurve 70 für ein Material eines erfindungsgemässen Stabilisationselements 3, 3a, 3b, 3c, beispielsweise für ein Acetal-Copolymer. Eine derartige Kurve stellt ein typisches Ergebnis eines Zugversuchs dar. Dabei ist die prozentuale Dehnung ε des Materials in Abhängigkeit einer Materialspannung σ, insbesondere einer Zugspannung, angegeben. Das elastisch-plastische Verhalten des Materials im Zugversuch ist dem Verhalten bei einer Druckbeanspruchung - wie sie für das erfindungsgemässe Stabilisationselement 3, 3a, 3b, 3c auftreten kann - als sehr ähnlich anzusehen.

Das für das erfindungsgemässe Stabilisationselement 3, 3a, 3b, 3c verwendete Material weist die Eigenschaft eines über einen bestimmten Dehnungsbereich weitgehend konstant bleibenden maximalen Materialspannungswerts oberhalb einer Streckgrenze bzw. Dehngrenze 71 auf. Die Bezeichnungen Streck- bzw. Dehngrenze werden dabei je nach Beschaffenheit des betrachteten Materials gebraucht. Die Streckgrenze bzw. Dehngrenze 71 ist ein Werkstoffkennwert und bezeichnet diejenige Spannung σ, ab der ein Werkstoff eine plastische (irreversible) Verformung aufweist, bzw. bis zu welcher der Werkstoff keine plastische Verformung aufweist. Das Auftreten von plastischer Deformation ist derart zu verstehen, dass diese bei einer Dehnung ε bis zur Streckgrenze 71 (technische Streckgrenze) nur in relativ geringem Ausmass (im Verhältnis zur elastischen Deformation) eintreten kann, jedoch eine (signifikante) plastische Verformung des Materials im Sinne der Erfindung mit dem Überschreiten der Streckgrenze 71 einsetzt. Dieses minimale Auftreten plastischer Verformung bei einer Dehnung von (elastischen) Materialien ist der Fachwelt bekannt. Das Material kann bei zunehmender Dehnung ε eine zunächst steil anwachsende Spannung σ aufweisen (linear-elastischer Bereich 73 der Kurve 70), wobei bei einer weiteren Dehnung ε nach Erreichen der Streckgrenze 71 die Materialspannung σ einen lokalen maximalen Spannungswert erreicht und dieser Spannungswert unabhängig von einer weiteren Dehnungszunahme im Wesentlichen konstant bleibt. In diesem Zusammenhang kann dem Material im Kurvenverlauf ein plastischer Bereich 74 zugeordnet werden, in dem die Verformung des Materials grössten Teils plastisch verläuft. Dieser Bereich 74 entspricht erfindungsgemäss einem Nutzungsbereich des Stabilisationselements 3, 3a, 3b, 3c, d.h. das Stabilisationselement 3, 3a, 3b, 3c liegt im grob positionierten bzw. verpressten Zustand und auch bei der Justage der optischen Baugruppe relativ zur Halterung in einem derartigen Deformationszustand vor, dass die Streckgrenze überschritten und eine Materialbelastung (Verpressung) innerhalb des plastischen Bereichs 74 vorliegt. In Abhängigkeit der spezifischen Materialeigenschaften des Stabilisationselements 3, 3a, 3b, 3c liegt hierbei ein Dehnungsbereich (welcher hinsichtlich der Dehnung dem plastischen Bereich 74 entspricht) vor, innerhalb dessen eine Dehnungsvariation erfolgen kann, ohne dass der Wert der Spannung σ im Material eine wesentliche Veränderung erfährt. Der plastische Bereich 74 weist dabei insbesondere einen Materialdehnungswert von bis zu 70%, insbesondere von 5% bis 65%, auf - bevor ein Bruch 72 des Materials ausserhalb des plastischen Bereichs 74 einsetzt. Der dargestellte linear flache, asymptotische Verlauf der Kurve 70 oberhalb der Streckgrenze 71 (und innerhalb des plastischen Bereichs 74) soll im Rahmen der Erfindung als eine im Wesentlichen konstant maximale Materialspannung bei variierender Materialdehnung ε verstanden werden. Eine in Abhängigkeit der Dehnungsänderung auftretende Spannungsänderung ist hier relativ zu einer entsprechenden Veränderung im linear-elastischer Bereich 73 sehr klein bzw. nicht vorhanden. Insbesondere kann in einer spezifischen Ausführungsform das Material in diesem Zusammenhang bei einer Dehnungsvariation innerhalb des plastischen Bereichs 74 eine Spannungsabweichung vom lokalen maximalen Materialspannungswert in Abhängigkeit von einem Kriechverhalten des Materials aufweisen.

Insbesondere liegt erfindungsgemäss das Stabilisationselement 3, 3a, 3b, 3c in einem grob positionierten Zustand, d.h. in einem Zustand, in dem das Stabilisationselement 3, 3a, 3b, 3c zwischen der Halterung und der optischen Baugruppe verpresst ist, in einem Belastungszustand oberhalb der Streckgrenze 71 bzw. Dehngrenze vor. In diesem Zustand kann somit eine weitere Dehnung ε bzw. Verpressung des Materials erfolgen, wobei die Materialspannung σ weitgehend konstant bleibt. Das Material wird dabei - im Sinne der Erfindung - plastisch deformiert. Insbesondere bei der Montage der optischen Baugruppe in die dafür vorgesehene Halterung kann durch Verwendung dieses erfindungsgemässen Stabilisationselements 3, 3a, 3b, 3c das Montieren innerhalb eines bestimmten Masstoleranzbereichs für die Bauteile hochgenau und ohne das Auftreten ungewünschter Materialspannungen erfolgen.

Aus einer Spannungsdehnungskurve 70 lässt sich ferner ein Spannungs-Dehnungs-Gradienten für ein Fertigungsmaterial eines erfindungsgemässen Stabilisationselements 3, 3a, 3b, 3c, ableiten. Der Spannungs-Dehnungs-Gradient ist dabei eine vom Materialzustand abhängige Grösse und durch die Steigung (dσ/dε) der Spannungsdehnungskurve 70 in jeweiligen Bereichen 73,74 definiert. Erfindungsgemäss weist das Fertigungsmaterial bei jeder Dehnung ε, bei der eine Spannung σ oberhalb der Streckgrenze verursacht wird, insbesondere einen niedrigen Spannungs-Dehnungs-Gradienten (nahe Null) auf, d.h. einen Spannungs-Dehnungs-Gradienten, welcher durch eine Steigung der Spannungsdehnungskurve 70 zwischen -1000 MPa (MPa/(m/m)) und +1000 MPa, insbesondere zwischen -500 MPa und +500 MPa, insbesondere zwischen -250 MPa und +250 MPa, insbesondere zwischen -100 MPa und +100 MPa, der Spannungsdehnungskurve 70 innerhalb des plastischen Bereichs 74 repräsentiert wird. Hierbei ist das Fertigungsmaterial als ein Material mit homogenen plastischen Eigenschaften (innerhalb des plastischen Bereichs 74) oberhalb der Streckgrenze 71 zu verstehen.

In diesem Zusammenhang ist das Stabilisationselement 3, 3a, 3b, 3c aus einem Material gefertigt, welches bei einer Deformation über die Streckgrenze einem Spannungswert von weniger als 1000 MPa, insbesondere einen Spannungswert zwischen 5 MPa und 1000 MPa, insbesondere zwischen 5 MPa und 250 MPa, insbesondere zwischen 2 MPa und 150 MPa, aufweist.

Zudem ist das Material für ein erfindungsgemässes Stabilisationselement 3, 3a, 3b, 3c vorzugsweise derart zu wählen, dass das Stabilisationselement 3, 3a, 3b, 3c bei einer im Wesentlichen konstanten Materialfestigkeit innerhalb des plastischen Bereichs 74 plastisch deformierbar ist. Bei einer Dehnung bzw. Verpressung des Stabilisationselements 3, 3a, 3b, 3c, insbesondere oberhalb der Streckgrenze, tritt dabei keine bzw. nur eine relativ kleine Veränderung der Materialfestigkeit im Rahmen des spezifischen niedrigen Spannungs-Dehnungs-Gradienten auf.

## Patentansprüche

1. Geodätisches Gerät zum Vermessen mit:
• einer optischen Baugruppe (1b) mit mindestens einem optischen Element (1c, 1d, 1e), insbesondere einer Linse, das eine optische Achse (8) definiert,
• einer Halterung (1a) für die optische Baugruppe (1b), wobei die Halterung (1a) eine Form aufweist, die geeignet ist die optische Baugruppe (1b) zumindest grob aufzunehmen, sodass in eingesetztem Zustand zwischen der Baugruppe (1b) und der Halterung (1a) ein Spalt (13) mit definierter Weite vorhanden ist, und
• einem Stabilisationsbauteil (2) zum Toleranzausgleich und zum stabilen Verbinden von optischer Baugruppe (1b) und Halterung (1a) mit mindestens einem, in dem Spalt (13) verpressbaren, Stabilisationselement (3, 3a, 3b, 3c),
**dadurch gekennzeichnet, dass**
• das Stabilisationselement (3, 3a, 3b, 3c) in einem unmontiertenZustand eine Dicke aufweist, die grösser als die Weite des Spaltes (13) ist, und
• die optische Baugruppe (1b), die Halterung (1a) und das Stabilisationsbauteil (2) derart ausgebildet sind und derart zusammenwirken, dass in einem grob positionierten Zustand durch Einsetzen der optischen Baugruppe (1b) in die Halterung (1a) das zwischen optischer Baugruppe (1b) und Halterung (1a) positionierte Stabilisationselement (3, 3a, 3b, 3c) in dem Spalt (13) verpresst wird und derart plastisch deformiert im Spalt (13) vorliegt, dass restelastische Kräfte (11) radial zur optischen Zielachse (8) zwischen Baugruppe (1b) und Halterung (1a) wirken und die Baugruppe (1b) und die Halterung (1a) in radialer Richtung stabilisiert zueinander vorliegen.

2. Geodätisches Gerät nach Anspruch 1,
**dadurch gekennzeichnet, dass**
die Anzahl der Stabilisationselemente (3, 3a, 3b, 3c) und die dadurch senkrecht zur optischen Achse (8) wirkenden restelastischen Kräfte (11) derart gewählt sind, dass in einem Justierzustand die Winkelstellung von optischer Baugruppe (1b) zu Halterung (la), insbesondere durch eine gleitende Drehbewegung (9), hochpräzise ausrichtbar ist und/oder die optische Baugruppe (1b) bezüglich der Halterung (1a) axial justierbar ist, wobei die Stabilisationselemente (3, 3a, 3b, 3c) plastisch deformiert vorliegen.

3. Geodätisches Gerät nach Anspruch 1 oder 2,
**dadurch gekennzeichnet, dass**
durch eine Fixierung in einem endmontierten Zustand die optische Baugruppe (1b) und die Halterung (1a) in der hochpräzisen Ausrichtung festgehalten werden.

4. Geodätisches Gerät nach einem der Ansprüche 1 bis 3,
**dadurch gekennzeichnet, dass**
mindestens drei Stabilisationselemente (3, 3a, 3b, 3c) an einem Stabilisationsbauteil (2) angeordnet sind.

5. Geodätisches Gerät nach einem der Ansprüche 1 bis 4,
**dadurch gekennzeichnet, dass**
das Stabilisationsbauteil (2) einen Rahmen (5) aufweist, insbesondere wobei der Rahmen (5) eine Form korrespondierend zur Form der Halterung (1a) und/oder der optischen Baugruppe (1b) aufweist.

6. Geodätisches Gerät nach einem der Ansprüche 1 bis 5,
**dadurch gekennzeichnet, dass**
das Stabilisationsbauteil (2) ringförmig ist und die Stabilisationselemente (3, 3a, 3b, 3c) gleichmässig über das Stabilisationsbauteil (2) verteilt angeordnet und in axialer Richtung ausgerichtet sind.

7. Geodätisches Gerät nach einem der .Ansprüche 1 bis 6,
**dadurch gekennzeichnet, dass**
das Stabilisationselement (3, 3a, 3b, 3c) eine Verformungszone (4) aufweist, und/oder das Stabilisationselement (3, 3a, 3b, 3c), insbesondere im Bereich der Verformungszone (4), aus einem Material mit homogenen plastischen Eigenschaften, insbesondere mit einem homogenen plastischen Fliessbereich, besteht.

8. Geodätisches Gerät nach einem der Ansprüche 1 bis 7,
**dadurch gekennzeichnet, dass**
das Stabilisationsbauteil (2) und/oder das Stabilisationselement (3, 3a, 3b, 3c) an die optische Baugruppe (1b) in einem Spritzgussverfahren angespritzt ist und/oder
das Stabilisationsbauteil (2) in die optische Baugruppe (1b) integriert ist, insbesondere wobei die optische Baugruppe (1b) und das Stabilisationsbauteil (2) einstückig ausgebildet sind.

9. Geodätisches Gerät nach einem der Ansprüche 1 bis 8,
**dadurch gekennzeichnet, dass**
das geodätische Gerät als Totalstation und die optische Baugruppe (1b) insbesondere als Teleskopobjektiv ausgeführt ist.

10. Geodätisches Gerät nach einem der Ansprüche 1 bis 9,
**dadurch gekennzeichnet, dass**
das Stabilisationselement (3, 3a, 3b, 3c) innerhalb eines Materialspannungsbereichs (75) oberhalb einer Streckgrenze (71) bei variierender Materialdehriung (ε) eine im Wesentlichen konstant maximale Materialspannung aufweist und im grob positionierten Zustand in einem Belastungszustand oberhalb der Streckgrenze (71) vorliegt.

11. Geodätisches Gerät nach einem der Ansprüche 1 bis 10,
**dadurch gekennzeichnet, dass**
das Stabilisationselement (3, 3a, 3b, 3c) aus einem bestimmten Fertigungsmaterial besteht mit einem innerhalb eines plastischen Bereichs (74) einer eine Spannungs-Dehnungs-Eigenschaft des Fertigungsmaterials repräsentierenden Spannungsdehnungskurve (70) definierten Spannungs-Dehnungs-Gradienten, insbesondere wobei der Spannungs-Dehnungs-Gradient durch eine Steigung zwischen -1000 MPa/(m/m) und +1000 MPa/(m/m), insbesondere zwischen -250 MPa und +250 MPa, der Spannungsdehnungskurve (70) für das Fertigungsmaterial definiert ist, insbesondere wobei das Fertigungsmaterial innerhalb des plastischen Bereichs (74) einen Materialspannungswert zwischen 5 MPa und 1000 MPa aufweist, insbesondere wobei das Stabilisationselement (3, 3a, 3b, 3c) innerhalb des plastischen Bereichs (74) bei einer im Wesentlichen konstanten Materialfestigkeit plastisch deformierbar ist.

12. Montageverfahren zum präzise positionierten Montieren einer optischen Baugruppe (1b) eines geodätischen Geräts mit definierter optischer Achse (8) in eine Halterung (la), wobei in zusammengesetztem Zustand zwischen Baugruppe (1b) und Halterung (1a) ein Spalt (13) mit definierter Weite vorhanden ist, mit einem Stabilisationsbauteil (2), mit mindestens einem, in dem Spalt (13) verpressbaren, Stabilisationselement (3, 3a, 3b, 3c), und mit den Schritten:
• Grobes Positionieren der optischen Baugruppe (1b) und der Halterung (1a) zueinander und Platzieren des Stabilisationsbauteils (2) zwischen Baugruppe (1b) und Halterung (la),
• Verpressen des Stabilisationselements (3, 3a, 3b, 3c) zwischen Baugruppe (1b) und Halterung (1a), sodass das Stabilisationselement (3, 3a, 3b, 3c) innerhalb eines homogenen plastischen Bereichs deformiert wird und restelastische Kräfte (11) derart radial zur optischen Achse (8) zwischen Baugruppe (1b) und Halterung (1a) wirken, dass die beiden Bauteile in radialer Richtung stabilisiert zueinander vorliegen,
• Justieren einer Winkelstellung und/oder einer axialen Position der optischen Baugruppe (1b) zur Halterung (1a), wobei die plastische Deformation des Stabilisationselements (3, 3a, 3b, 3c) erhalten bleibt, und
• Fixieren der optischen Baugruppe (1b) und der Halterung (1a), sodass diese in der eingestellten Winkelstellung und/oder der axialen Position festgehalten werden.

13. Montageverfahren nach Anspruch 12 **dadurch gekennzeichnet, dass**
das Justieren der optischen Baugruppe (1b) zur Halterung (1a) durch ein Drehen der optischen Baugruppe (1b) um die optische Achse (8) und/oder durch ein axiales Bewegen parallel zur optischen Achse (8) erfolgt.

14. Montageverfahren nach Anspruch 12 oder 13 **dadurch gekennzeichnet, dass**
das Stabilisationselement (3, 3a, 3b, 3c) innerhalb eines Materialspannungsbereichs (75) oberhalb einer Streckgrenze (71) bei variierender Materialdehnung (ε) eine im Wesentlichen konstant maximale Materialspannung aufweist und im grob positionierten Zustand in einem Belastungszustand oberhalb der Streckgrenze (71) vorliegt, und/oder
das Stabilisationselement (3, 3a, 3b, 3c) aus einem bestimmten Fertigungsmaterial besteht mit einem innerhalb eines plastischen Bereichs (74) einer eine Spannungs-Dehnungs-Eigenschaft des Fertigungsmaterials repräsentierenden Spannungsdehnungskurve (70) definierten Spannungs-Dehnungs-Gradienten, insbesondere wobei der Spannungs-Dehnungs-Gradient durch eine Steigung der Spannungsdehnungskurve (70) für das Fertigungsmaterial zwischen -1000 MPa/(m/m) und +1000 MPa/(m/m), insbesondere zwischen -250 MPa und +250 MPa, definiert ist, insbesondere wobei das Fertigungsmaterial innerhalb des plastischen Bereichs (74) einen Materialspannungswert zwischen 5 MPa und 1000 MPa aufweist, insbesondere wobei das Stabilisationselement (3, 3a, 3b, 3c) innerhalb des plastischen Bereichs (74) bei einer im Wesentlichen konstanten Materialfestigkeit plastisch deformiert wird.

## Claims

1. A geodetic instrument for surveying, having:
• an optical assembly (1b) having at least one optical element (1c, 1d, 1e), in particular a lens, which defines an optical axis (8),
• a holder (1a) for the optical assembly (1b), the holder (1a) having a shape which is suitable for at least approximately accommodating the optical assembly (1b), so that in the inserted state there is a gap (13) with a defined width between the assembly (1b) and the holder (1a), and
• a stabilization component (2) for tolerance compensation and for stable connection of the optical assembly (1b) and the holder (1a), having at least one stabilization element (3, 3a, 3b, 3c) which can be compressed in the gap (13),
**characterized in that**
• the stabilization element (3, 3a, 3b, 3c) in an unmounted state has a thickness which is greater than the width of the gap (13), and
• the optical assembly (1b), the holder (1a) and the stabilization component (2) are formed in such a way and interact in such a way that in an approximately positioned state, by inserting the optical assembly (1b) into the holder (1a), the stabilization element (3, 3a, 3b, 3c) positioned between the optical assembly (1b) and the holder (1a) is compressed in the gap (13) and is plastically deformed in the gap (13) in such a way that residual elastic forces (11) act radially with respect to the optical sighting axis (8) between the assembly (1b) and the holder (1a), and the assembly (1b) and the holder (1a) are stabilized with respect to one another in the radial direction.

2. The geodetic instrument as claimed in claim 1, 1
**characterized in that**
the number of stabilization elements (3, 3a, 3b, 3c) and the residual elastic forces (11) therefore acting perpendicularly to the optical axis (8) are selected in such a way that, in an adjustment state, the angular setting of the optical assembly (1b) with respect to the holder (1a) can be aligned with high precision, in particular by a sliding rotation movement (9), and/or the optical assembly (1b) can be axially adjusted with respect to the holder (1a), the stabilization elements (3, 3a, 3b, 3c) being plastically deformed.

3. The geodetic instrument as claimed in either of claims 1 and 2,
**characterized in that**
by fixing in a finally mounted state, the optical assembly (1b) and the holder (1a) are retained in the high-precision alignment.

4. The geodetic instrument as claimed in any one of claims 1 to 3,
**characterized in that**
at least three stabilization elements (3, 3a, 3b, 3c) are arranged on a stabilization component (2).

5. The geodetic instrument as claimed in any one of claims 1 to 4,
**characterized in that**
the stabilization component (2) has a frame (5), the frame (5) in particular having a shape corresponding to the shape of the holder (1a) and/or of the optical assembly (1b).

6. The geodetic instrument as claimed in any one of claims 1 to 5,
**characterized in that**
the stabilization component (2) is annular and the stabilization elements (3, 3a, 3b, 3c) are arranged uniformly distributed over the stabilization component (2) and aligned in the axial direction.

7. The geodetic instrument as claimed in any one of claims 1 to 6,
**characterized in that**
the stabilization element (3, 3a, 3b, 3c) has a deformation zone (4), and/or the stabilization element (3, 3a, 3b, 3c), particularly in the region of the deformation zone (4), consists of a material having homogeneous plastic properties, in particular with a homogeneous plastic flow range.

8. The geodetic instrument as claimed in any one of claims 1 to 7,
**characterized in that**
the stabilization component (2) is produced by an injection molding method, and/or the stabilization component (2) is integrated into the optical assembly (1b), in particular with the stabilization component (2) and/or the stabilization element (3, 3a, 3b, 3c) being injection-molded onto the optical assembly (1b) or the optical assembly (1b) and the stabilization component (2) being formed integrally.

9. The geodetic instrument as claimed in any one of claims 1 to 8,
**characterized in that**
the geodetic instrument is configured as a total station and the optical assembly (1b) is configured in particular as a telescope objective.

10. The geodetic instrument as claimed in any one of claims 1 to 9,
**characterized in that**
the stabilization element (3, 3a, 3b, 3c) has an essentially constant maximum material stress within a material stress range (75) above an elastic limit (71) with varying material strain (ε) and in the approximately positioned state is in a loading state above the elastic limit (71).

11. The geodetic instrument as claimed in any one of claims 1 to 10,
**characterized in that**
the stabilization element (3, 3a, 3b, 3c) consists of a particular manufacturing material having a defined stress/strain gradient within a plastic range (74) of a stress/strain curve (70) representing a stress/strain property of the manufacturing material, in particular with the stress/strain gradient being defined by a slope of between -1000 MPa/(m/m) and +1000 MPa/(m/m), in particular between -250 MPa and +250 MPa, of the stress/strain curve (70) for the manufacturing material, in particular with the manufacturing material having a material stress value of between 5 MPa and 1000 MPa within the plastic range (74), in particular with the stabilization element (3, 3a, 3b, 3c) being plastically deformable with an essentially constant material strength within the plastic range (74).

12. A mounting method for the precisely positioned mounting of an optical assembly (1b) of a geodetic instrument having a defined optical axis (8) in a holder (1a), there being a gap (13) with a defined width between the assembly (1b) and the holder (1a) in the assembled state, with a stabilization component (2), with at least one stabilization element (3, 3a, 3b, 3c) which can be compressed in the gap (13), and with the following steps:
• approximate positioning of the optical assembly (1b) and the holder (1a) with respect to one another and placement of the stabilization component (2) between the assembly (1b) and the holder (1a),
• compression of the stabilization element (3, 3a, 3b, 3c) between the assembly (1b) and the holder (1a), so that the stabilization element (3, 3a, 3b, 3c) is deformed within a homogeneous plastic range and residual elastic forces (11) act radially with respect to the optical axis (8) between the assembly (1b) and the holder (1a), in such a way that the two components are stabilized with respect to one another in the radial direction,
• adjustment of an angular setting and/or an axial position of the optical assembly (1b) with respect to the holder (1a), the plastic deformation of the stabilization element (3, 3a, 3b, 3c) being preserved, and
• fixing of the optical assembly (1b) and the holder (1a) so that they are retained in the adjusted angular setting and/or the axial position.

13. The mounting method as claimed in claim 12,
**characterized in that**
the adjustment of the optical assembly (1b) with respect to the holder (1a) is carried out by rotation of the optical assembly (1b) about the optical axis (8) and/or by an axial movement parallel to the optical axis (8).

14. The mounting method as claimed in either of claims 12 and 13,
**characterized in that**
the stabilization element (3, 3a, 3b, 3c) has an essentially constant maximum material stress within a material stress range (75) above an elastic limit (71) with varying material strain (ε) and in the approximately positioned state is in a loading state above the elastic limit (71), and/or
the stabilization element (3, 3a, 3b, 3c) consists of a particular manufacturing material having a defined stress/strain gradient within a plastic range (74) of a stress/strain curve (70) representing a stress/strain property of the manufacturing material, in particular with the stress/strain gradient being defined by a slope of between -1000 MPa/(m/m) and +1000 MPa/(m/m), in particular between -250 MPa and +250 MPa, of the stress/strain curve (70) for the manufacturing material, in particular with the manufacturing material having a material stress value of between 5 MPa and 1000 MPa within the plastic range (74), in particular with the stabilization element (3, 3a, 3b, 3c) being plastically deformed with an essentially constant material strength within the plastic range (74).

## Revendications

1. Appareil géodésique pour l'arpentage, comprenant :
• un bloc optique (1b) comportant au moins un élément optique (1c, 1d, 1e), en particulier une lentille, qui définit un axe optique (8),
• une monture (1a) pour le bloc optique (1b), la monture (1a) présentant une forme qui est adaptée à recevoir le bloc optique (1b) au moins grossièrement de sorte que, dans l'état inséré, il existe une fente (13) de largeur définie entre le bloc (1b) et la monture (la), et
• un composant de stabilisation (2) pour la compensation de tolérance et pour la liaison stable du bloc optique (1b) et de la monture (la), avec au moins un élément de stabilisation (3, 3a, 3b, 3c) pouvant être pressé dans la fente (13), **caractérisé en ce que**
• l'élément de stabilisation (3, 3a, 3b, 3c) présente, dans l'état non monté, une épaisseur qui est supérieure à la largeur de la fente (13), et
• le bloc optique (1b), la monture (1a) et le composant de stabilisation (2) sont conçus et coopèrent de telle sorte que, dans un état grossièrement positionné par insertion du bloc optique (1b) dans la monture (la), l'élément de stabilisation (3, 3a, 3b, 3c) positionné entre le bloc optique (1b) et la monture (1a) est pressé dans la fente (13) et déformé plastiquement dans la fente (13) de telle sorte que des forces élastiques résiduelles (11) agissent radialement par rapport à l'axe de visée optique (8) entre le bloc (1b) et la monture (la), et le bloc (1b) et la monture (1a) soient stabilisés l'un par rapport à l'autre dans la direction radiale.

2. Appareil géodésique selon la revendication 1,
**caractérisé en ce que**
le nombre d'éléments de stabilisation (3, 3a, 3b, 3c) et les forces élastiques résiduelles (11) agissant ainsi perpendiculairement à l'axe optique (8) sont choisis de telle sorte que, dans un état de réglage, la position angulaire du bloc optique (1b) par rapport à la monture (la), en particulier par un mouvement de rotation glissant (9), puisse être alignée avec une grande précision et/ou le bloc optique (1b) puisse être réglé axialement par rapport à la monture (la), les éléments de stabilisation (3, 3a, 3b, 3c) étant déformés plastiquement.

3. Appareil géodésique selon la revendication 1 ou 2,
**caractérisé en ce que**
par fixation dans un état final monté, le bloc optique (1b) et la monture (1a) sont maintenus dans l'alignement de grande précision.

4. Appareil géodésique selon l'une des revendications 1 à 3,
**caractérisé en ce**
**qu'**au moins trois éléments de stabilisation (3, 3a, 3b, 3c) sont disposés sur un composant de stabilisation (2).

5. Appareil géodésique selon l'une des revendications 1 à 4,
**caractérisé en ce que**
le composant de stabilisation (2) présente un cadre (5), le cadre (5) présentant en particulier une forme qui correspond à la forme de la monture (1a) et/ou du bloc optique (1b).

6. Appareil géodésique selon l'une des revendications 1 à 5,
**caractérisé en ce que**
le composant de stabilisation (2) est de forme annulaire et les éléments de stabilisation (3, 3a, 3b, 3c) sont répartis de manière uniforme sur le composant de stabilisation (2) et alignés dans la direction axiale.

7. Appareil géodésique selon l'une des revendications 1 à 6,
**caractérisé en ce que**
l'élément de stabilisation (3, 3a, 3b, 3c) présente une zone de déformation (4) et/ou l'élément de stabilisation (3, 3a, 3b, 3c) est constitué, en particulier au niveau de la zone de déformation (4), d'un matériau présentant des propriétés plastiques homogènes, en particulier un domaine d'écoulement plastique homogène.

8. Appareil géodésique selon l'une des revendications 1 à 7,
**caractérisé en ce que**
le composant de stabilisation (2) et/ou l'élément de stabilisation (3, 3a, 3b, 3c) est surmoulé sur le bloc optique (1b) dans un procédé de moulage par injection et/ou le composant de stabilisation (2) est intégré dans le bloc optique (1b), le bloc optique (1b) et le composant de stabilisation (2) étant en particulier formés d'une seule pièce.

9. Appareil géodésique selon l'une des revendications 1 à 8,
**caractérisé en ce que**
l'appareil géodésique est réalisé sous la forme d'une station totale et le bloc optique (1b) en particulier sous la forme d'un objectif de télescope.

10. Appareil géodésique selon l'une des revendications 1 à 9,
**caractérisé en ce que**
l'élément de stabilisation (3, 3a, 3b, 3c) présente une contrainte de matériau maximale sensiblement constante à l'intérieur d'un domaine de contrainte de matériau (75) supérieur à une limite d'élasticité (71) avec un allongement de matériau (ε) variable et se trouve dans un état de charge supérieur à la limite d'élasticité (71) dans l'état grossièrement positionné.

11. Appareil géodésique selon l'une des revendications 1 à 10,
**caractérisé en ce que**
l'élément de stabilisation (3, 3a, 3b, 3c) est constitué d'un matériau de fabrication spécifique présentant un gradient de contrainte-allongement défini à l'intérieur d'un domaine plastique (74) d'une courbe contrainte-allongement (70) représentant une propriété de contrainte-allongement du matériau de fabrication, en particulier le gradient de contrainte-allongement étant défini par une pente de la courbe contrainte-allongement (70) pour le matériau de fabrication comprise entre -1000 MPa/(m/m) et +1000 MPa/(m/m), en particulier entre -250 MPa et +250 MPa, en particulier le matériau de fabrication présentant une valeur de contrainte de matériau comprise entre 5 MPa et 1000 MPa à l'intérieur du domaine plastique (74), en particulier l'élément de stabilisation (3, 3a, 3b, 3c) étant déformable plastiquement à l'intérieur du domaine plastique (74) avec une résistance de matériau sensiblement constante.

12. Procédé de montage permettant de monter en position précise un bloc optique (1b) d'un appareil géodésique ayant un axe optique défini (8) dans une monture (la), dans lequel, dans l'état assemblé, il existe une fente (13) d'une largeur définie entre le bloc (1b) et la monture (la), avec un composant de stabilisation (2), avec au moins un élément de stabilisation (3, 3a, 3b, 3c) pouvant être pressé dans la fente (13), et comportant les étapes consistant à :
• positionner grossièrement le bloc optique (1b) et la monture (1a) l'un par rapport à l'autre et placer le composant de stabilisation (2) entre le bloc (1b) et la monture (la),
• presser l'élément de stabilisation (3, 3a, 3b, 3c) entre le bloc (1b) et le support (1a) de sorte que l'élément de stabilisation (3, 3a, 3b, 3c) soit déformé dans un domaine plastique homogène et que des forces élastiques résiduelles (11) agissent radialement à l'axe optique (8) entre le bloc (1b) et la monture (1a) de telle sorte que les deux composants soient stabilisés l'un par rapport à l'autre dans la direction radiale,
• régler une position angulaire et/ou une position axiale du bloc optique (1b) par rapport à la monture (la), la déformation plastique de l'élément de stabilisation (3, 3a, 3b, 3c) étant préservée, et
• fixer le bloc optique (1b) et la monture (1a) de sorte que ceux-ci soient maintenus dans la position angulaire et/ou la position axiale réglée.

13. Procédé de montage selon la revendication 12,
**caractérisé en ce que**
le réglage du bloc optique (1b) par rapport à la monture (1a) est effectué par une rotation du bloc optique (1b) autour de l'axe optique (8) et/ou par un déplacement axial parallèlement à l'axe optique (8).

14. Procédé de montage selon la revendication 12 ou 13,
**caractérisé en ce que**
l'élément de stabilisation (3, 3a, 3b, 3c) présente une contrainte de matériau maximale sensiblement constante à l'intérieur d'un domaine de contrainte de matériau (75) supérieur à une limite d'élasticité (71) avec un allongement de matériau (ε) variable et se trouve dans un état de charge supérieur à la limite d'élasticité (71) dans l'état grossièrement positionné, et/ou l'élément de stabilisation (3, 3a, 3b, 3c) est constitué d'un matériau de fabrication spécifique présentant un gradient de contrainte-allongement défini à l'intérieur d'un domaine plastique (74) d'une courbe contrainte-allongement (70) représentant une propriété de contrainte-allongement du matériau de fabrication, en particulier le gradient de contrainte-allongement étant défini par une pente de la courbe contrainte-allongement (70) pour le matériau de fabrication comprise entre -1000 MPa/(m/m) et +1000 MPa/(m/m), en particulier entre -250 MPa et +250 MPa, en particulier le matériau de fabrication présentant une valeur de contrainte de matériau comprise entre 5 MPa et 1000 MPa à l'intérieur du domaine plastique (74), en particulier l'élément de stabilisation (3, 3a, 3b, 3c) étant déformable plastiquement à l'intérieur du domaine plastique (74) avec une résistance de matériau sensiblement constante.
